# FASCICULE DE BREVET EUROPEEN

(11) **EP 3 389 874 B1**
(45) Date de publication et mention de la délivrance du brevet: **02.10.2024**
(21) Numéro de dépôt: 16829264.7
(22) Date de dépôt: 19.12.2016
(51) Int. Cl.: B05B 14/00, B05B 7/00, B60H 3/02, B05B 17/06, B05B 1/26

(54) **DISPOSITIF DE PULVÉRISATION À TRANSDUCTEUR PIÉZOÉLECTRIQUE, NOTAMMENT POUR VÉHICULE**
PIEZOELEKTRISCHE WANDLER-SPRÜHVORRICHTUNG, INSBESONDERE FÜR EIN FAHRZEUG
PIEZOELECTRIC-TRANSDUCER SPRAY DEVICE, NOTABLY FOR A VEHICLE

(30) Priorité: 17.12.2015 FR 1562576
(43) Date de publication de la demande: 24.10.2018
(73) Titulaire: ARECO FINANCES ET TECHNOLOGIE - ARFITEC, 06130 Grasse (FR)
(72) Inventeur: GSCHWIND, Michel, 06130 Placassier (FR); RICHARD, Frédéric, 06220 Golfe Juan (FR); SABRAOUI, Abbas, 06130 Grasse (FR)
(74) Mandataire: Schmidt, Martin Peter
(86) Numéro de dépôt international: PCT/FR2016/053545
(87) Numéro de publication internationale: WO 2017/103548

(56) Documents cités:
- EP-A1- 0 782 885
- FR-A1- 2 788 706
- FR-A1- 3 004 971

## Description

### Domaine technique de l'invention

L'invention concerne les dispositifs de nébulisation, plus particulièrement de petite taille, aptes à générer un brouillard de micro-gouttelettes d'un liquide, par exemple d'eau, dans le but de rafraîchir l'atmosphère. L'invention trouve son application principale à de tels dispositifs, qui peuvent être montés dans un véhicule pour humidifier et rafraîchir l'air et le rendre agréable à respirer. Néanmoins, ces dispositifs peuvent également être installés dans d'autres environnements, comme sur un étal pour humidifier et rafraîchir des produits frais exposés à la vente.

### Etat de la technique

Le brevet EP 0 691 162 décrit un dispositif de nébulisation équipé d'une buse de concentration, dans laquelle un élément piézoélectrique immergé dans l'eau génère un brouillard de gouttelettes d'eau à la sortie de la buse précitée. Le brouillard, qui est ensuite emporté par un courant d'air généré par un ventilateur, est extrait dans l'atmosphère via un orifice de diffusion. Cette buse est disposée verticalement, avec la sortie focalisante pointant vers le haut. Cette caractéristique est désavantageuse, dans la mesure où elle est coûteuse en énergie, car la nébulisation est réalisée à l'encontre du poids du liquide présent dans la buse.

La présente invention vise donc plus particulièrement une buse dont la sortie focalisante est globalement dirigée vers le bas, solution connue par exemple de EP 0 782 885. Le dispositif de nébulisation décrit dans ce document possède un ventilateur, situé sensiblement à la même altitude que l'élément piézoélectrique. En service, le brouillard sortant de la buse est dévié par un déflecteur, puis est emporté par le flux d'air créé par le ventilateur. L'orifice de diffusion est situé à peu près au droit de la sortie de la buse, au-dessous de cette dernière.

Ce dispositif de nébulisation connu présente cependant certains inconvénients. En effet il est d'une structure relativement complexe, notamment en ce qu'il présente un nombre élevé d'éléments constitutifs. Par ailleurs, il peut être à l'origine de problèmes d'hygiène, dus en particulier à un phénomène de stagnation du liquide. Ce dispositif de nébulisation implique en outre un volume mort de liquide relativement élevé. De plus il a été constaté que d'éventuelles fuites de liquide, en service, sont difficiles à identifier. Enfin la nébulisation produite par ce dispositif n'est pas d'une bonne qualité dans toutes les situations fonctionnelles, en particulier lorsque le dispositif est utilisé dans un environnement subissant de fortes accélérations, comme par exemple un véhicule automobile.

De façon générale, il existe un besoin pour des dispositifs de nébulisation, aptes à fonctionner de manière satisfaisante lorsqu'ils sont placés dans un environnement dit perturbé, à savoir soumis à des accélérations selon les différentes directions de l'espace. On citera notamment les véhicules terrestres, notamment automobiles, mais aussi aériens ou maritimes. Par ailleurs, les dispositifs de nébulisation utilisés sur des étals doivent aussi répondre à ces contraintes. En effet un étal peut également être perturbé par des chocs et d'autres perturbations mécaniques, dans la mesure où il est entouré par des personnes susceptibles d'entrer en contact mécanique avec lui.

Cela étant précisé, la présente invention se propose de remédier aux différents inconvénients de l'art antérieur évoqués ci-dessus. Elle vise donc à proposer un dispositif de nébulisation à excitation piézoélectrique amélioré, qui présente une structure compacte, peu coûteuse, et qui se prête en particulier à une miniaturisation. L'invention vise également à proposer un tel dispositif qui est apte à garantir une nébulisation de qualité satisfaisante même dans un environnement perturbé, à savoir lorsqu'il est soumis à des accélérations importantes selon les différentes dimensions de l'espace. L'invention vise enfin à proposer un tel dispositif de nébulisation, qui offre une précision de réglage satisfaisante, ainsi qu'un pilotage fiable.

### Objets de l'invention

A cet effet, l'invention a tout d'abord pour objet un dispositif de nébulisation selon la revendication 1 annexée.

Des caractéristiques avantageuses de ce dispositif de nébulisation font l'objet des revendications 2 à 9 annexées.

L'invention a également pour objet un procédé de mise en oeuvre d'un dispositif de nébulisation ci-dessus, selon la revendication 10 annexée.

Des caractéristiques avantageuses de ce procédé de mise en oeuvre font l'objet des revendications 11 et 12 annexées.

L'invention a également pour objet un kit de nébulisation selon la revendication 13 annexée.

Il est du mérite des inventeurs d'avoir identifié qu'au moins certains des inconvénients de EP 0 782 885 sont liés au fait que le volume de collecte de liquide est intégré dans un réservoir déporté par rapport à l'enceinte, dans laquelle est généré le jet de liquide. Par ailleurs, ce réservoir déporté est situé à une altitude supérieure à celle du fond de l'enceinte de nébulisation. Par conséquent, il est tout d'abord nécessaire de prévoir des conduites spécifiques, afin d'assurer la communication de liquide entre ce réservoir déporté et la buse. Par ailleurs, étant donné le positionnement du réservoir déporté, il est nécessaire de prévoir également des pompes ou analogues, afin de faire s'écouler le liquide, à l'encontre de la gravité, depuis l'enceinte de nébulisation vers ce réservoir de collecte. Les équipements mécaniques précités, notamment les conduites, sont à l'origine d'un volume mort de liquide. De plus, ils peuvent être sujets à des fuites, qu'il est difficile de détecter. Enfin ils sont à l'origine de phénomènes de stagnation de liquide, désavantageux en termes hygiéniques.

Selon l'invention, le volume de collecte de liquide est apte à collecter par gravité ladite fraction du jet de liquide généré par la buse. Cela permet de réduire le nombre d'éléments constitutifs du dispositif, et d'en alléger la structure globale. Par ailleurs, le liquide peut être acheminé entre ce volume de collecte et l'entrée de la buse par une conduite de forme simplifiée, ce qui évite les pertes de charge et volumes morts. Ce trajet de liquide étant plus direct, les risques de fuite éventuelle sont en outre réduits. Les avantages ci-dessus sont d'autant plus notables, lorsque le volume de collecte de liquide, destiné à l'alimentation de la buse, est directement intégré à l'enceinte de nébulisation.

Les avantages ci-dessus, ainsi que d'autres avantages de l'invention, apparaîtront plus clairement à la lecture de la description ci-dessous.

### Description des figures

Les figures 1 à 17 illustrent des modes de réalisation de l'invention, mais ne limitent pas la portée de l'invention.
La figure 1 est une vue en perspective éclatée, illustrant les différents éléments constitutifs d'un dispositif de nébulisation conforme à un premier mode de réalisation de l'invention ;
Les figures 2 et 3 sont des vues en perspective selon deux angles différents, illustrant le dispositif de nébulisation conforme à l'invention.
Les figures 4 et 5 sont des vues en perspective avec arrachements, illustrant selon deux angles différents le dispositif de nébulisation de la figure 1.
La figure 6 est une vue de face illustrant le dispositif de nébulisation conforme à l'invention.
Les figures 7 et 8 sont des vues en coupe selon les lignes VII-VII et VIII-VIII à la figure 6.
Les figures 9 et 10 sont des vues en perspective selon deux angles différents, illustrant à plus grande échelle un couvercle appartenant au dispositif de nébulisation conforme à l'invention.
Les figures 11 et 12 sont des vues en perspective avec arrachements, illustrant selon deux angles différents le couvercle des figures 9 et 10.
La figure 13 est une vue à plus grande échelle du détail XIII de la figure 2.
La figure 14 est une vue en perspective, analogue à la figure 3, illustrant un dispositif de nébulisation conforme à un deuxième mode de réalisation de l'invention.
La figure 15 est une vue en perspective avec arrachements, analogue à la figure 5, illustrant le dispositif de nébulisation de la figure 14.
La figure 16 est une vue en perspective avec arrachements, analogue à la figure 4, illustrant un dispositif de nébulisation conforme à un troisième mode de réalisation de l'invention.
La figure 17 est une vue en perspective avec arrachements, analogue à la figure 5, illustrant le dispositif de nébulisation de la figure 16.

Les références numériques suivantes sont utilisées dans la présente description:

| | | | |
|---|---|---|---|
| 1 | Dispositif de nébulisation | 2 | Enceinte |
| 2' | Embase | 3 | Fond |
| A2 | Axe de 2 | 4 | Parois latérales |
| 5 | Couvercle | 7 | Ventilateur |
| 7' | Entrée de 7 | 7" | Découpe |
| 6,8 | Perçages | S1 | Siège |
| 9,10 | Jupes | C7 | Canal de ventilation |
| C20 | Canal de nébulisation | 11 | Canal intermédiaire |
| 12 | Canal aval | 13 | Embout de diffusion |
| 14 | Orifice de diffusion | 15 | Paroi courbe |
| 16 | Chambre principale | 17 | Déflecteur |
| 18 | Passage | 20 | Buse |
| 21 | Orifice de sortie | 22 | Elément piézoélectrique |
| 23 | Orifices d'admission | 25 | Espace de mise en pression |
| 26 | Bride | 26',26" | Orifices de 26 |
| 30 | Pompe | 31 | Conduite de 30 |
| 30',30" | Entrée / sortie de 30 | 33 | Tétine |
| 40 | Réservoir secondaire | 42 | Conduit de 40 |
| 43 | Capteur | 44 | Flotteur |
| 45 | Boîtier | 46 | Carte électronique |
| 47 | Ventilateur | 48 | Prise d'air |
| 51 | Fût de 5 | S2 | Siège |
| 53 | Vis | 51' | Orifices de 51 |
| 54 | Joint | 55 | Joint |
| J | Jet de liquide | B | Brouillard |
| T | Axe transversal | L | Axe longitudinal |
| T1,T2 | Accélérations | VC | Volume de collecte |
| 101 | Dispositif de nébulisation | 102 | Enceinte |
| 104 | Parois latérales | 104' | Pieds |
| 105 | Couvercle | 107 | Ventilateur |
| 113 113' | Embouts de diffusion | 120 | Buse |
| VC | Volume de collecte | 130 | Pompe |
| 201 | Dispositif de nébulisation | 202 | Enceinte de nébulisation |
| 204 | Parois latérales | 205 | Couvercle |
| 207 | Ventilateur | | |
| 209,210 | Jupes | C207 | Canal de ventilation |
| C220 | Canal de nébulisation | 211 | Canal intermédiaire |
| 217 | Fond | 217' | Zone du fond |
| 218 | Ouverture de sortie | 219 | Col |
| 260 | Enceinte annexe | 262 | Embase |
| 263 | Fond | 264 | Parois latérales |
| 265 | Couvercle | VC" | Volume de collecte |
| 268 | Ouverture de sortie | 269 | Col |
| 270 | Conduit de liaison | 280 | Pompe |

### Description détaillée

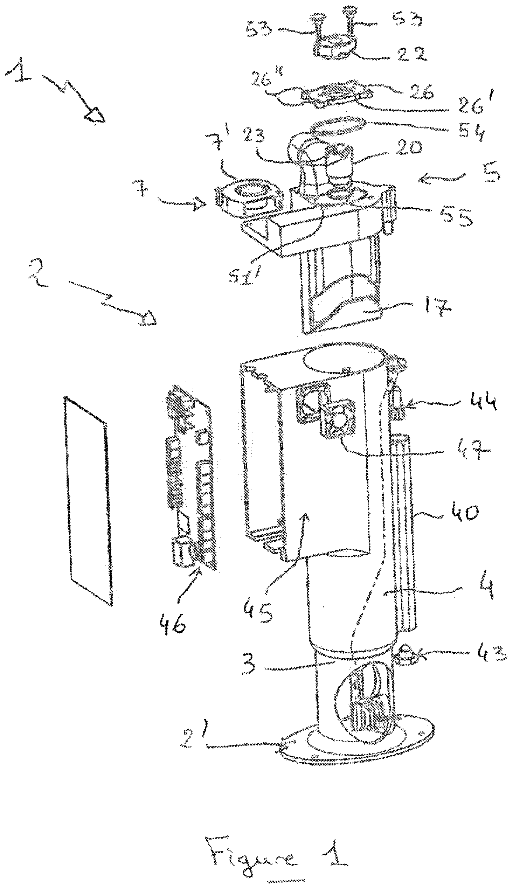

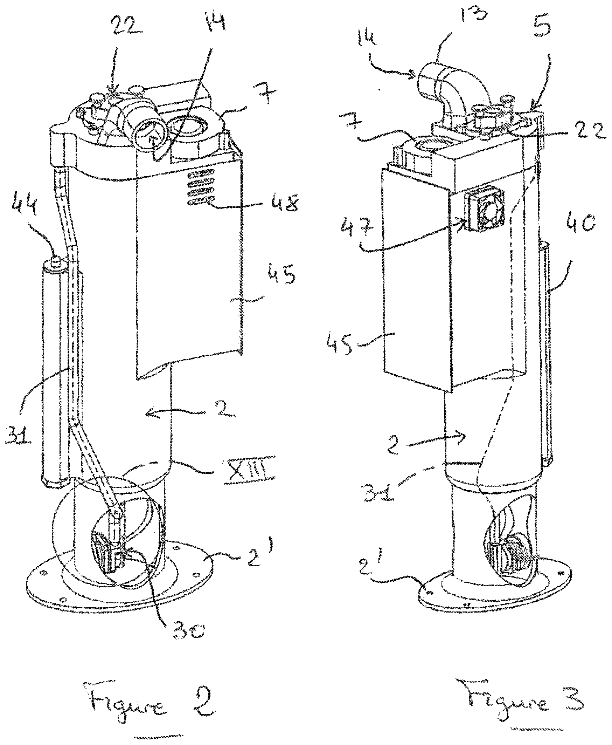

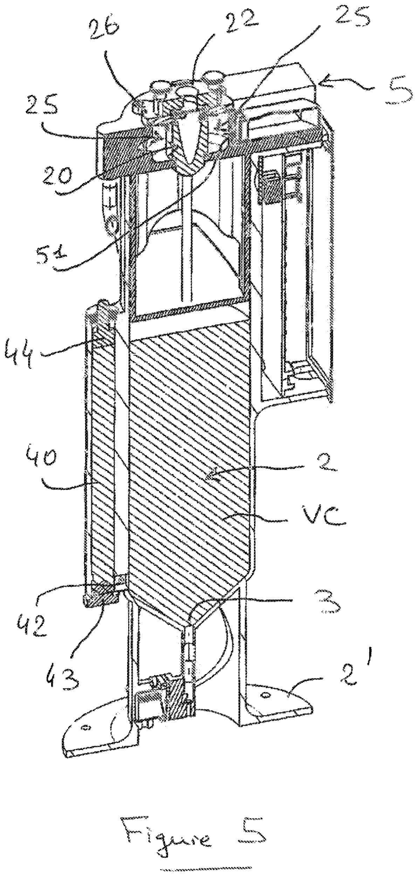

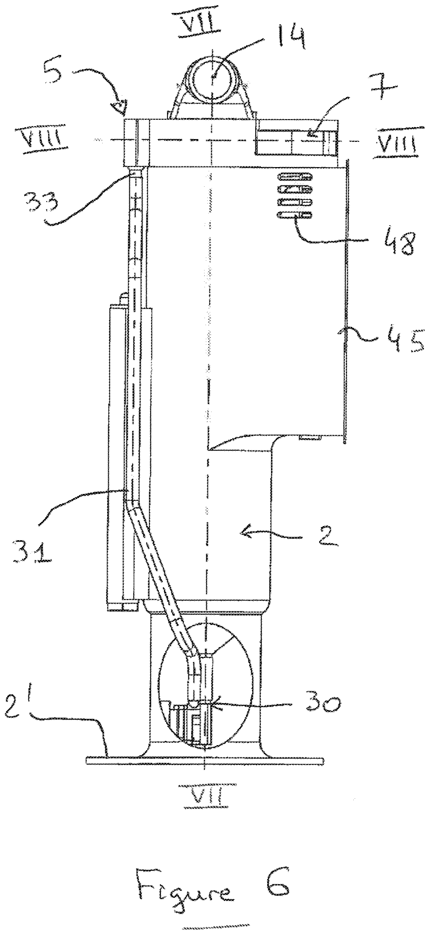

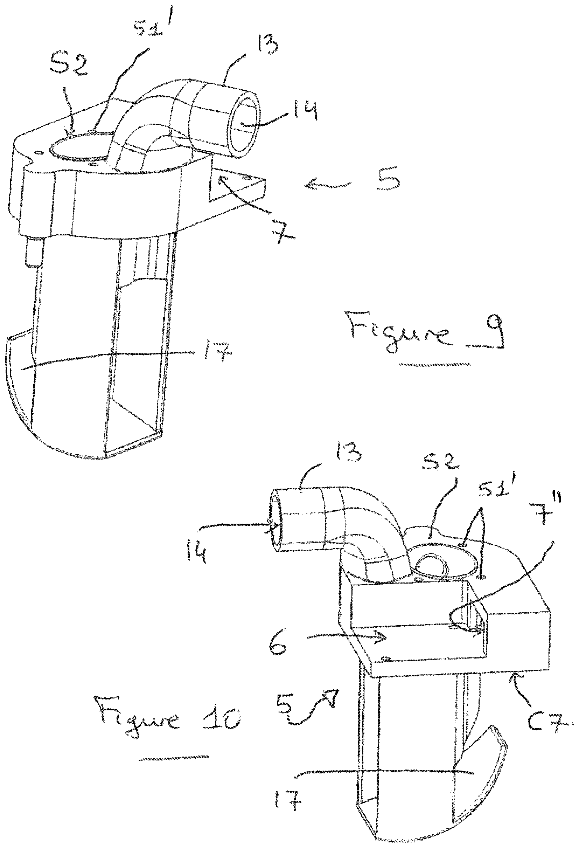

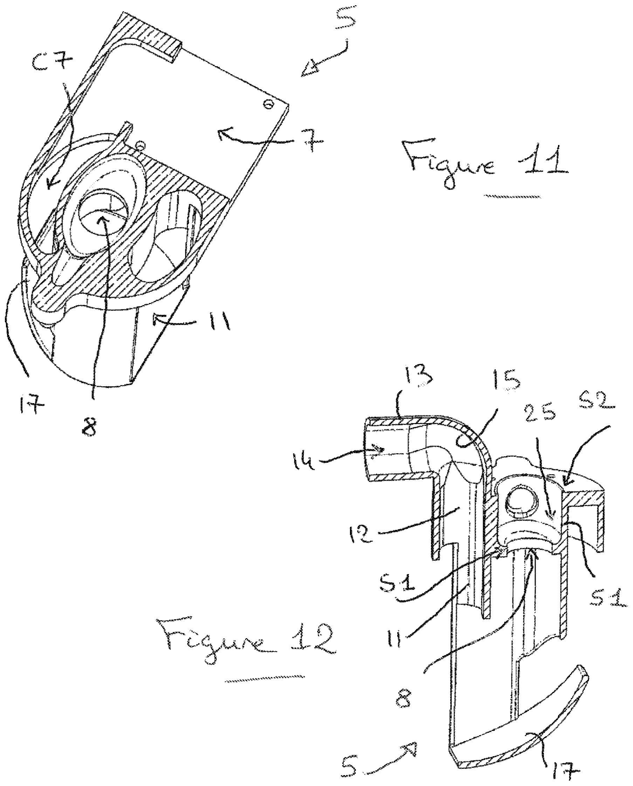

Les figures 1 à 13 illustrent un dispositif de nébulisation conforme à un premier mode de réalisation de l'invention, lequel est désigné dans son ensemble par la référence 1. Ce dispositif 1 comprend tout d'abord une enceinte allongée 2, de forme cylindrique, laquelle définit un volume intérieur. L'axe principal A2 de cette enceinte 2 est sensiblement vertical en service, comme cela sera explicité dans ce qui suit. Cette enceinte 2 comprend un corps 3,4 et un couvercle 5 rapporté sur le corps, avantageusement de manière amovible.

Le corps est formé par un fond fermé 3, dont la section se rétrécit vers le bas, ainsi que par des parois latérales 4 s'étendant à partir de ce fond 3. Ces parois 4 définissent une ouverture principale, qui est obturée au moyen du couvercle précité. Ce dernier est rapporté sur l'extrémité supérieure des parois latérales par tout moyen approprié, notamment par encliquetage élastique. A son extrémité inférieure, l'enceinte 2 est équipée d'une embase 2', faisant saillie vers le bas à partir du fond 3. Cette embase est équipée de moyens de fixation, avantageusement amovibles, notamment par vissage, sur un support. Ce dernier peut être, par exemple, un élément de structure d'un véhicule automobile.

On peut prévoir que le corps 3,4 et le couvercle 5 sont réalisés en des matériaux différents. Ainsi, le corps peut être réalisé en aluminium ou en acier inoxydable, ce qui est avantageux en termes hygiéniques. Par ailleurs, le couvercle peut être réalisé en une matière moulable, notamment en une matière plastique telle qu'un composite de type PPS, ce qui est avantageux en termes de fabrication. On peut également prévoir que le couvercle peut pivoter, par glissement, par rapport aux parois 4. De la sorte, la direction dans laquelle le liquide est nébulisé peut être modifiée, sans avoir à déplacer le corps.

Ce couvercle 5 est creusé d'une échancrure 6, sur le pourtour de laquelle est fixé un moyen de ventilation 7, de type connu en soi. Ce ventilateur 7, qui possède une entrée 7', est apte à souffler l'air à travers un canal C7 dit de ventilation, via une découpe 7" mettant en communication ce canal et l'échancrure 6. Par ailleurs, un perçage 8 est pratiqué sensiblement au centre du couvercle. Les parois de ce perçage 8 définissent un siège de réception S1 pour une buse de nébulisation, désignée dans son ensemble par la référence 20, comme cela va être décrit plus en détail dans ce qui suit.

Le couvercle est équipé de deux jupes 9 et 10, qui délimitent trois canaux distincts, en partie supérieure de l'enceinte. Tout d'abord, le canal précité C7 de ventilation et un canal C20 dit de nébulisation s'étendent au-dessous respectivement du ventilateur et de la chambre de nébulisation. Enfin, la jupe 10 sépare le canal de nébulisation par rapport à un canal 11 dit intermédiaire de diffusion. Les trois canaux définis ci-dessus possèdent des axes principaux, qui sont sensiblement parallèles à celui A2.

Le canal intermédiaire 11 communique avec un canal aval 12 de diffusion, dont l'axe principal est en revanche sensiblement horizontal. Ce canal aval débouche dans un embout de diffusion 13, faisant saillie radialement par rapport aux parois de l'enceinte. Cet embout délimite, dans sa partie aval, un orifice principal de diffusion 14. La transition entre les canaux respectivement intermédiaire et aval est assurée par une paroi 15 du couvercle, formant déflecteur. Cette paroi présente un profil arrondi, typiquement en forme d'arc de cercle, notamment de quart de cercle.

A leur extrémité inférieure, les trois canaux C7, C20 et 11 débouchent dans une chambre principale 16, ou chambre commune, dont la section correspond à celle de l'enceinte. Cette chambre est munie d'un déflecteur 17 qui, selon une caractéristique avantageuse de l'invention, est venu de moulage avec le couvercle 5. Dans ces conditions, lorsqu'on désolidarise le couvercle par rapport aux parois latérales 4, sensiblement la totalité du volume intérieur de l'enceinte est accessible de façon simple. Il est alors possible de procéder à toute opération de maintenance souhaitable, comme par exemple le nettoyage du bac, le changement de la pompe dans le cas où elle est immergée dans l'enceinte principale, ou encore l'accès à un éventuel élément de désinfection.

Ce déflecteur 17 possède une forme arrondie, dont la concavité est tournée le haut. Il présente un profil descendant, depuis le débouché du canal de ventilation vers le débouché du canal intermédiaire. Ce déflecteur 17 ne s'étend pas sur toute la largeur de l'enceinte de sorte que, à l'opposé de sa zone de fixation, il délimite un passage 18 permettant l'écoulement de liquide vers le fond 3, par gravité.

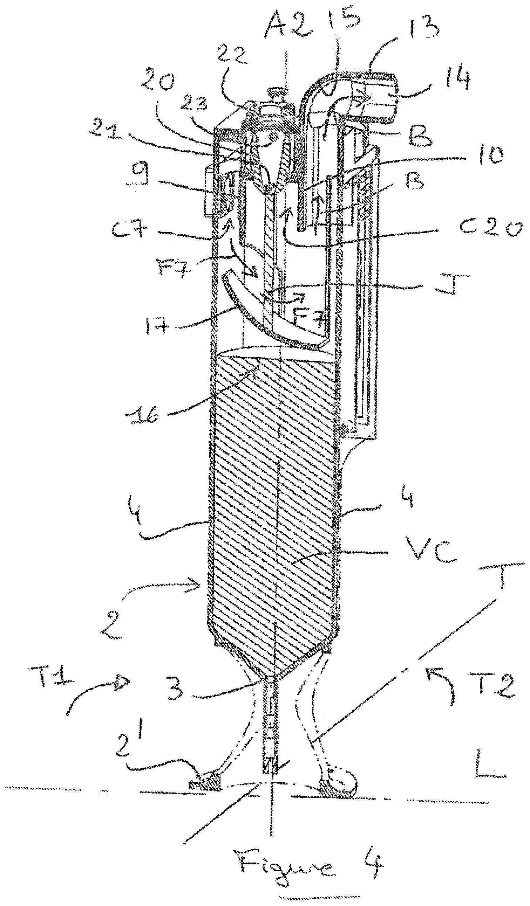

Les figures 4, 5 et 7 illustrent, de manière plus précise, la fixation de la buse de concentration 20 sur le couvercle 5. La buse 20 possède une paroi latérale, qui délimite un volume intérieur apte à contenir le liquide à pulvériser. La section transversale intérieure de cette paroi présente un rétrécissement progressif en direction d'un orifice 21 de sortie du liquide. A l'opposé de cet orifice 21, le volume intérieur précité est fermé par un élément (céramique) piézo-électrique 22, avec interposition d'une bride 26. L'élément 22 est apte à émettre des ondes acoustiques dans le liquide. La paroi interne de ladite buse est typiquement en un matériau dur apte à réfléchir les ondes acoustiques générées par ledit élément piézo-électrique 22.

La forme convergente des parois internes de la buse 20 est déterminée de manière à faire focaliser les ondes acoustiques ultra-soniques à un endroit proche de la partie centrale de l'orifice de sortie 21. Cela permet de générer un brouillard de micro-gouttelettes du liquide à pulvériser lorsque la buse est remplie de liquide et lorsque la céramique 22 émet des ondes acoustiques de fréquence et intensité appropriées. La forme convergente des parois internes de la buse est avantageusement parabolique, ce qui améliore le rendement. De manière préférée, la forme des parois internes de la buse 20 montre une symétrie radiale.

D'une manière générale, l'élément céramique piézo-électrique 22 est de préférence de forme cylindrique, typiquement une plaquette de forme circulaire. A titre d'exemple, il peut avoir un diamètre de 20 mm ou de 25 mm. L'orifice de sortie 21 a de préférence une forme circulaire. Dans un mode de réalisation, son diamètre est compris entre 2 et 10 mm, et avantageusement entre 4 et 6 mm. La hauteur intérieure de la buse est typiquement comprise entre 30 mm et 40 mm, sachant que cette distance correspond au champ proche des ultrasons générés par la céramique piézo-électrique 22.

De manière connue, la buse 20 comporte au moins un orifice d'admission de liquide permettant d'admettre le liquide à pulvériser dans le volume intérieur de la buse. De manière préférée, une pluralité d'orifices d'admission sont aménagés autour de l'axe longitudinal de la buse, dans une zone proche de l'élément céramique piézo-électrique. Dans le présent exemple de réalisation, on retrouve quatre orifices d'admission 23 régulièrement répartis à la périphérie de la buse, dont seuls deux sont représentés. La section d'admission de la buse 20, à savoir la somme des surfaces des orifices d'admission, est avantageusement supérieure à la section de l'orifice de sortie, de préférence au moins trois fois supérieure, afin de prévenir un manque d'eau et d'éviter le phénomène de cavitation dans la buse. Cette condition est remplie par exemple avec quatre orifices d'admission d'un diamètre de 5 mm pour un orifice de sortie d'un diamètre de 6 mm.

Un fût 51, appartenant au couvercle 5, fait saillie vers le haut à partir du pourtour du perçage 8. A son extrémité supérieure, la périphérie de ce fût 51 définit un siège S2 pour la bride précitée 26. De façon plus précise, l'élément piézoélectrique possède des orifices de passage de vis 53, qui pénètrent dans des premiers orifices 26' de la bride, en vue de leur fixation mutuelle. Cette bride possède en outre des seconds orifices 26", pour le passage de vis supplémentaires non représentées, qui pénètrent dans des orifices en regard 51', prévus sur le siège S2. Un premier joint d'étanchéité 54 est écrasé entre la bride 26 et le deuxième siège S2, alors qu'un second joint 55 est écrasé entre la buse 20 et le premier siège S1.

La face externe de la paroi de la buse délimite, avec les faces en regard du fût 51, un espace annulaire 25 formant une chambre de mise en pression pour le liquide. En service, cette chambre est en permanence remplie de liquide, ce qui garantit un fonctionnement optimal de l'élément piézoélectrique, même dans des conditions perturbées. Cette chambre 25 est alimentée en liquide, depuis le volume de collecte, par une conduite 31 qui va être décrite ci-dessous. De plus, cette chambre 25 communique avec le volume intérieur de la buse, via les orifices d'admission 23. La présence de la bride 26 est avantageuse, puisqu'elle permet tout d'abord de fermer la chambre de mise en pression 25 avec une étanchéité particulièrement satisfaisante. De plus, elle assure une fixation amovible de l'élément piézoélectrique, lequel peut donc être remplacé de manière simple et rapide.

La fréquence d'ultrasons est avantageusement comprise entre 1,3 MHz et 3 MHz. Elle peut être par exemple de 1,68 MHz. L'élément piézo-électrique peut typiquement absorber une puissance électrique importante, par exemple 40 W pour un diamètre de 20 mm. Environ 40% de cette puissance est rendue sous forme d'énergie acoustique transmise au liquide, le reste est dissipé sous forme thermique. Pour cette raison, pendant son fonctionnement, l'élément piézo-électrique doit être constamment refroidi par le liquide afin d'éviter sa détérioration par surchauffe.

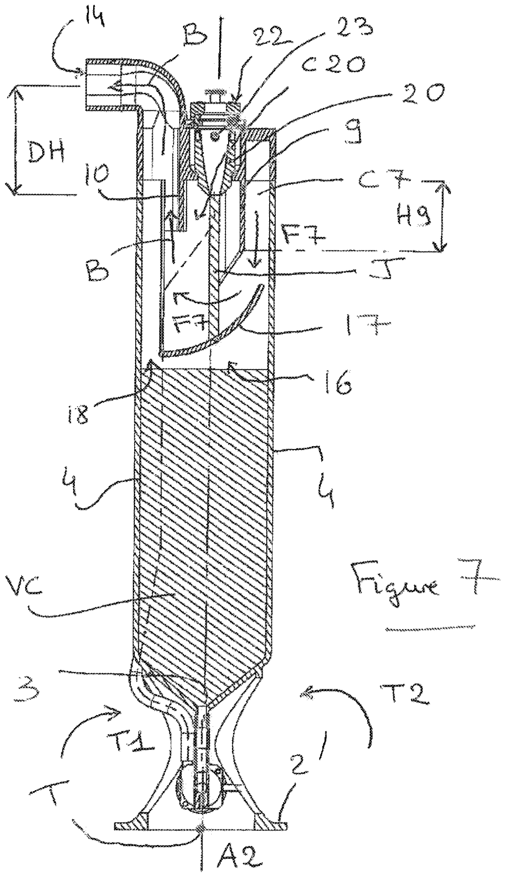

Comme illustré notamment sur la figure 7, l'axe longitudinal de la buse 20 est sensiblement parallèle à l'axe principal A2 de l'enceinte, à savoir qu'il est globalement vertical. Selon l'invention, on peut prévoir que cet axe longitudinal est incliné par rapport à la verticale, selon un angle compris entre -45° et +45°. On peut cependant prévoir une plage plus large, la valeur limite de cet angle correspondant à la formation de bulles dans la buse. Selon une variante avantageuse, notamment en termes de compacité globale du dispositif, cet angle peut être compris entre -20° et +20°, notamment entre -10° et +10°. La valeur de cet angle est considérée « au repos », à savoir lorsque le dispositif selon l'invention est monté sur un support, comme un véhicule ou un étal, qui repose sur un sol horizontal en l'absence de perturbation dynamique.

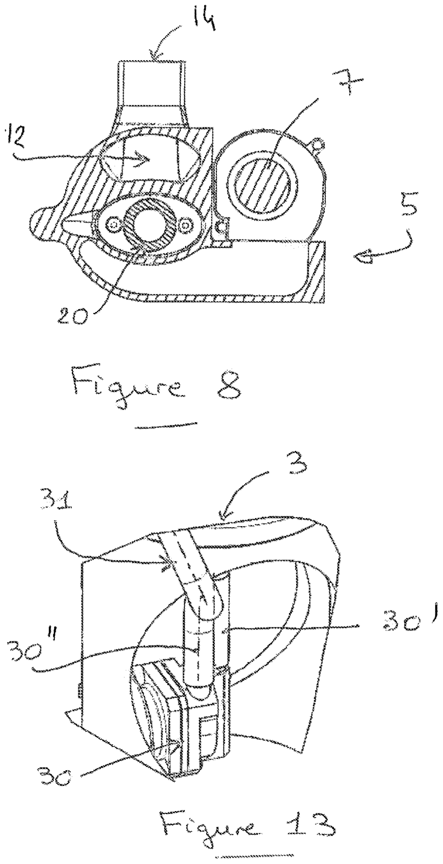

La buse 20 est alimentée en liquide par la conduite 31 mentionnée ci-dessus, associée à une pompe 30 dite de circulation. Comme le montre notamment la figure 13, la pompe 30 est montée sur l'embase 2'. Elle possède une entrée 30' reliée au fond 3 de l'enceinte, ainsi qu'une sortie 30" sur laquelle est connectée l'extrémité inférieure de la conduite 31. L'extrémité supérieure de cette conduite est connectée à une tétine 33 prévue sur le couvercle 5, elle-même en communication avec la chambre de mise sous pression 25, via un canal non représenté ménagé dans ce couvercle.

De la sorte, cette conduite relie les orifices d'admission 23 de la buse et un volume VC, dit de collecte de liquide, délimité par le fond 3 et la partie basse des parois latérales 4 de l'enceinte. Dans l'exemple illustré, la pompe 30 et la conduite 31 sont placées à l'extérieur de l'enceinte 2. Cependant, à titre de variante non représentée, on peut tout d'abord prévoir que la pompe est disposée à l'intérieur de cette enceinte et communique avec la conduite 31 par tout moyen approprié. On peut aussi prévoir que la conduite 31 s'étend, au moins en partie, à l'intérieur de cette enceinte. On notera en outre que l'invention offre un aspect avantageux, en ce que la circulation de liquide entre le volume de collecte et la buse permis grâce à une conduite unique 31. Cela est à comparer avec l'art antérieur représenté par EP 0 782 885, où il est nécessaire de prévoir deux conduites reliant la buse et le volume de collecte déporté.

Différents types de pompes peuvent être utilisés. On préfère une pompe à débit réglable ; une valeur entre 0,1 et 2,8 litres/min étant bien adaptée aux dimensions de la buse 20 indiquées ci-dessus. Dans un mode de réalisation avantageux, qui convient bien à un système miniaturisé utilisable pour l'habitacle d'un véhicule, la pompe de circulation 30 peut être une pompe hélice. Avantageusement, cette pompe absorbe un courant continu et on règle la tension pour faire varier la vitesse de rotation et donc la pression de refoulement en sortie de la buse, ce qui permet de modifier les caractéristiques du jet de liquide sortant de la buse.

Dans un mode de réalisation avantageux de l'invention, le dispositif comprend, en plus de l'enceinte, un réservoir de liquide dit secondaire 40. Ce dernier, qui est déporté, est relié à la partie inférieure de l'enceinte par au moins un conduit 42. De la sorte, le liquide présent dans l'enceinte et celui présent dans le réservoir secondaire communiquent selon le principe dit « des vases communicants ». Ce réservoir secondaire est équipé, dans sa partie inférieure, d'un capteur 43 de présence de liquide. De plus un flotteur 44, formant indicateur de niveau, est reçu dans le volume intérieur de ce réservoir.

Les inventeurs se sont rendu compte que lorsque l'élément piézo-électrique 22 fonctionne à sec même pour une très courte durée, il risque d'être endommagé ou même être détruit. Pour éviter cela, les inventeurs ont prévu que des moyens appropriés permettant d'empêcher que ledit élément piézoélectrique ne fonctionne (i.e. n'émette pas d'ondes acoustiques ou seulement des ondes acoustiques de très faible puissance) lorsque l'élément piézo-électrique n'est pas immergé dans le liquide à pulvériser. Ces moyens peuvent prendre différentes formes. Dans l'exemple illustré, le capteur 43 remplit cette fonction.

De manière générale, on peut prévoir au moins un moyen de détection du manque de liquide et/ou un moyen de détection de l'échauffement de l'élément piézo-électrique et un moyen de rétroaction sur l'alimentation électrique dudit élément piézo-électrique. Ledit moyen de détection du manque de liquide peut être un capteur de niveau, tel celui 43 ou analogue, ou un capteur de présence qui coupe ou régule le fonctionnement de l'élément piézo-électrique. Ce capteur peut être un capteur optique ou un capteur capacitif ou encore un capteur inductif, mais parmi ces trois, on préfère un capteur optique qui présente une meilleure fiabilité. Ce capteur peut se situer à d'autres endroits que celui montré sur les figures, notamment dans le fond de l'enceinte ou à l'intérieur même de la buse. On peut également utiliser un capteur à ultrasons, agissant comme un capteur analogique permettant de faire la mesure du débit instantané du système.

Ledit moyen de détection du manque de liquide peut être un capteur qui détecte la présence du jet de liquide en sortie de l'orifice de sortie de la buse. Ce moyen est moins préféré car il entraîne un retard dans la détection d'un défaut d'immersion dudit élément piézo-électrique. Ledit moyen de détection du manque de liquide peut être un capteur de pression dans la buse et/ou à la sortie de la pompe de circulation.

Un autre moyen pour détecter le manque de liquide dans la buse est un détecteur de la température à la surface et/ou à l'intérieur dudit élément piézo-électrique, ce qui permet de détecter l'échauffement rapide dudit élément piézo-électrique avant qu'il n'ait subi des dégâts importants. Cette détection peut se faire par exemple à l'aide d'un thermocouple. Dans le cadre de la présente invention la détection thermique au niveau de l'élément piézo-électrique n'est cependant pas un mode de réalisation préféré : on préfère les moyens qui détectent de manière plus directe le manque de liquide, et à un stade plus précoce auquel le manque de liquide n'a pas encore perturbé le fonctionnement dudit élément piézo-électrique.

On peut combiner deux ou plusieurs moyens de détection, sélectionnés parmi ceux qui viennent d'être présentés et/ou parmi ceux qui le seront ci-dessous. Le dispositif conforme à l'invention est enfin équipé d'un boîtier de commande 45, visible sur la figure 1, lequel renferme une carte électronique 46, de tout type approprié, pour le pilotage du dispositif. Ce boîtier est muni d'un ventilateur 47 de refroidissement de la carte 46, associé à une prise d'air 48.

Selon une variante avantageuse de l'invention, l'orifice principal de diffusion est situé à une altitude supérieure à celle enseigné dans l'art antérieur, conforme à EP 0 782 885. En référence à la figure 7, on note DH la différence d'altitudes entre cet orifice principal de diffusion et l'orifice de sortie de la buse. DH est typiquement compris entre 10 mm et 60 mm, notamment entre 20 mm et 30 mm. D'autres valeurs dimensionnelles avantageuses, caractéristiques du dispositif de nébulisation conforme à l'invention, sont les suivantes :
- différence d'altitudes entre l'orifice de sortie du ventilateur 7 et l'orifice de sortie 21 de la buse : entre 5 mm et 30 mm, notamment entre 10 mm et 15 mm
- diamètre de l'enceinte : entre 30 mm et 150 mm, notamment entre 70 mm et 100 mm
- hauteur totale de l'enceinte : entre 150 mm et 450 mm, notamment entre 350 mm et 400 mm
- distance entre l'orifice de sortie de la buse et le déflecteur : entre 50 mm et 140 mm, notamment entre 70 mm et 90 mm
- hauteur H9 de la jupe de séparation entre les canaux C7 et C20 : entre 30 mm et 60 mm, notamment entre 40 mm et 50 mm.

Les valeurs ci-dessus sont considérées dans la position de repos, telle que définie ci-dessus. Les altitudes des orifices sont prises au centre de ces derniers. Les distances sont prises entre les faces en regard des éléments mécaniques considérés.

Les figures 4 et 7 montrent de manière schématique le fonctionnement du dispositif de nébulisation conforme à l'invention, tel que décrit ci-dessus. On remplit tout d'abord le volume intérieur de l'enceinte, de façon connue en soi. On met ensuite en marche la pompe de circulation, de sorte que le liquide circule en boucle, via la conduite 31, entre la buse et le fond de l'enceinte. Au début de cette phase de circulation de liquide, on n'active pas encore l'élément piézoélectrique.

Lorsque le niveau de liquide dans l'enceinte 2 et le réservoir secondaire 40 est tel, que le capteur de niveau 43 détecte une présence de liquide, l'élément piézoélectrique est mis en service. Le liquide est alors admis dans la buse 20 de sorte que, sous l'action de cet élément piézoélectrique, un jet J de liquide s'écoule à partir de l'orifice de sortie. Ce jet de liquide est dirigé globalement vers le bas, ce qui est avantageux sur un plan énergétique puisqu'il n'est pas nécessaire de créer une force s'opposant au poids du liquide contenu dans la buse. Par ailleurs, le flotteur 44 possède une fonction d'indicateur visuel de niveau d'eau dans le bac principal.

Dès la création de ce jet J, on actionne le ventilateur 7 de manière à générer un flux d'air matérialisé par les flèches F7. On notera que, en amont du déflecteur, l'air et le jet d'eau s'écoulent sensiblement en parallèle, dans les canaux respectifs C7 et C20. Ceci est avantageux car l'air ne perturbe sensiblement pas la création de la nébulisation, en particulier dans les premiers centimètres du jet immédiatement en aval de la buse. En effet, les cinq premiers centimètres environ présentent un rendement de nébulisation élevé par rapport au reste du jet. Il est donc avantageux de ne pas perturber cette zone, afin de générer un maximum de nébulisation lorsque le liquide est proche du déflecteur 17. De plus, la présence de ce déflecteur permet de modifier la direction d'écoulement de l'air, transversalement au jet de liquide. Ceci assure un bon mélange entre air et liquide, afin d'extraire les micro-gouttelettes présentes dans ce dernier.

Par ailleurs, ce déflecteur évite un impact direct du jet dans le volume de liquide de collecte, présent en fond de l'enceinte. Cela est avantageux, tout d'abord en ce que ce volume d'eau ne subit pas d'agitation intempestive, qui serait due à une arrivée directe du jet. De plus, cela permet d'atténuer les nuisances sonores et contribue au confort global des usagers. Enfin, cette absence d'impact direct évite toute formation substantielle de bulles d'air, qui serait préjudiciable au rendement et à la fiabilité de l'élément piézoélectrique.

Le flux d'air emporte les micro-gouttelettes d'eau générées par la buse autour du jet d'eau. Ainsi se forme un brouillard B de micro-gouttelettes qui quitte la chambre principale 16 et s'écoule le long du canal intermédiaire 11, puis du canal aval 12. Ce brouillard est alors projeté, via l'orifice de diffusion 14, dans son environnement de destination, par exemple l'habitacle d'un véhicule. On notera que la présence de la paroi courbe 15 est avantageuse, car elle offre un degré de séparation supplémentaire entre les gouttelettes de tailles différentes. La fraction de liquide, qui n'est pas emportée par le flux d'air, est alors dirigée par gravité vers le fond 3 de l'enceinte, via le passage 18. Cette fraction liquide permet d'alimenter en permanence le volume VC de liquide de collecte.

Lorsque le niveau de liquide tel que détecté par le capteur de présence d'eau 43 est insuffisant pour assurer que l'élément piézo-électrique 22 est totalement immergé, une boucle de rétroaction interrompt ou diminue le fonctionnement de cet élément piézo-électrique. Si cette baisse de niveau se prolonge au-delà d'une certaine durée, de l'eau est rajoutée dans le volume intérieur de l'enceinte. L'ajout d'eau peut aussi se faire de manière permanente, de manière continue ou discontinue, par exemple à l'aide d'une pompe péristaltique (non montrée sur les figures), afin de compenser la perte d'eau due à la nébulisation.

Selon une variante avantageuse, on peut prévoir de mesurer, de façon continue ou à intervalles réguliers, la vitesse de rotation de la pompe. Si on constate une brusque augmentation de cette vitesse, ceci peut signifier que la pompe tourne, non plus dans l'eau, mais dans l'air. En d'autres termes, la quantité de liquide présente dans le dispositif est insuffisante. La boucle de rétroaction précitée agit sur l'élément piézoélectrique, de manière analogue à celle décrite au paragraphe précédent.

Selon une autre variante avantageuse, on peut prévoir de mesurer, de façon continue ou à intervalles réguliers, la puissance de l'élément piézoélectrique. Si on constate un brusque changement de cette puissance, ceci peut signifier qu'il y a un manque d'eau dans la buse ou dans le bac sous pression. On ajuste alors le débit de la pompe, de manière à ajuster le débit d'eau en fonction de la puissance acoustique (le débit de la pompe doit avantageusement être augmenté en fonction de la puissance électrique envoyé à l'élément piézoélectrique).

Sur les figures 4 et 7, on note T l'axe dit transversal du dispositif, qui est perpendiculaire à la fois à l'axe principal A2, ainsi qu'à l'axe dit longitudinal L, reliant le ventilateur 7 et l'orifice de diffusion 14. On se place tout d'abord dans le cas où le dispositif subit une forte accélération, autour de cet axe T, selon un premier sens matérialisé par la flèche T1. Ce phénomène correspond par exemple au freinage d'un véhicule équipé de ce dispositif. L'axe principal de l'enceinte, qui est vertical au repos, forme alors un angle par rapport à cette verticale, qui est par exemple compris entre 5° et 35°.

On suppose par ailleurs que l'enceinte vient d'être remplie et que, par conséquent, le niveau d'eau dans cette enceinte et dans le réservoir secondaire est maximal. Du fait de l'inclinaison du dispositif, le niveau de liquide n'est plus perpendiculaire aux parois 4. Le liquide a au contraire tendance à occuper une fraction plus importante de la paroi, côté orifice de diffusion, et une fraction réduite de la paroi, côté ventilateur. Cependant, du fait de l'altitude élevée de cet orifice, aucune quantité substantielle de liquide ne peut s'échapper via cet orifice. En effet le niveau supérieur du liquide, formant le volume de collecte, est situé bien au-dessous de cet orifice. Par conséquent, la qualité globale de la nébulisation n'est globalement pas impactée par la forte inclinaison du dispositif.

On suppose désormais que le dispositif subit une forte accélération, autour de l'axe T, selon un deuxième sens matérialisé par la flèche T2, à savoir opposé à celui T1. Ce phénomène correspond par exemple à l'accélération d'un véhicule équipé de ce dispositif. L'axe principal de l'enceinte, qui est vertical au repos, forme alors un angle par rapport à cette verticale, qui est par exemple compris entre 5° et 35°. On suppose par ailleurs que l'enceinte vient d'être remplie et que, par conséquent, le niveau d'eau dans cette enceinte et dans le réservoir secondaire est maximal. Du fait de l'inclinaison du dispositif, le niveau de liquide n'est plus perpendiculaire aux parois 4. Le liquide a désormais tendance à occuper une fraction plus importante de la paroi, côté ventilateur, et une fraction réduite de la paroi, côté orifice de diffusion.

Cependant, du fait de l'altitude élevée du ventilateur, aucune quantité substantielle de liquide ne peut atteindre ce dernier. En effet, le niveau supérieur de liquide est situé bien au-dessous de la sortie du ventilateur. Par conséquent, le bon fonctionnement global de ce dernier est préservé, même lors d'une forte inclinaison du dispositif.

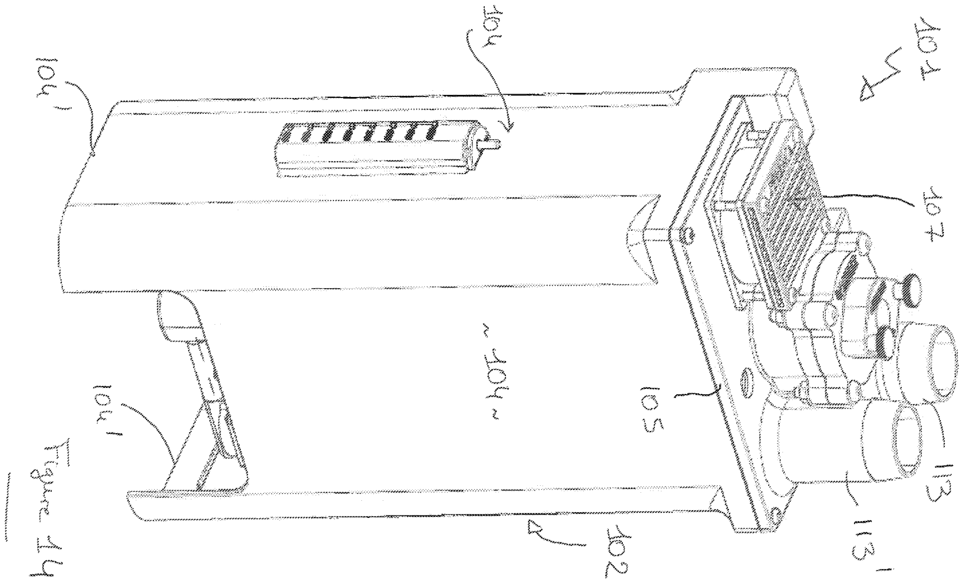

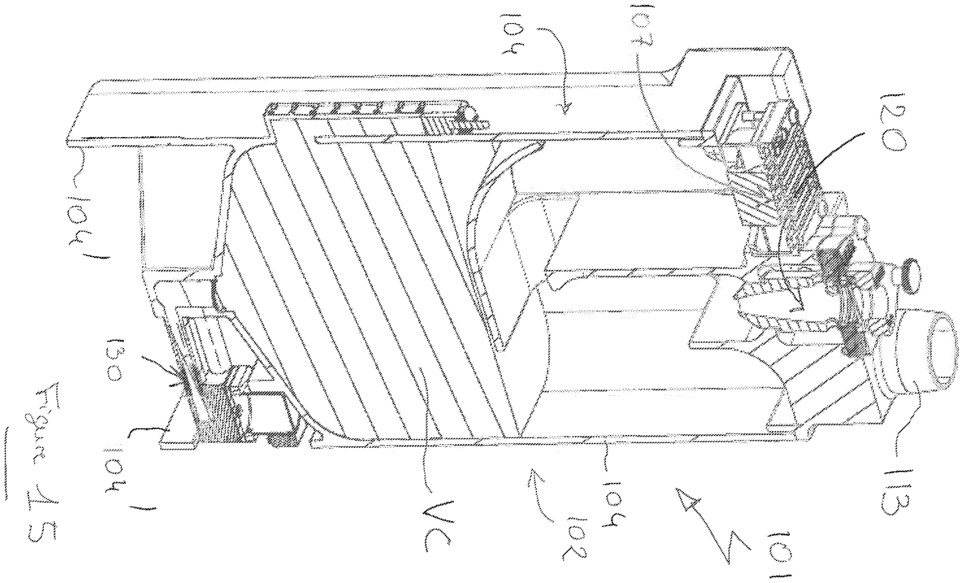

Les figures 14 et 15 illustrent un autre dispositif de nébulisation 101, conforme à un deuxième mode de réalisation de l'invention. Sur ces figures, les éléments mécaniques analogues à ceux des figures 1 à 13 y sont affectés des mêmes numéros de référence, augmentés de 100.

Le dispositif de nébulisation 101 diffère de celui 1 des figures précédentes, tout d'abord en ce qu'il est équipé de deux embouts de diffusion 113 et 113', placés côte à côte. Par ailleurs, les parois latérales 104 de l'enceinte 102 ne sont pas de section circulaire comme dans le premier mode de réalisation, mais de section rectangulaire. La forme globale de l'enceinte 102 est donc parallélépipédique, ce qui lui confère un aspect global massif, avantageux en termes de compacité. De plus, les extrémités inférieures des parois latérales définissent des pieds 104', permettant la stabilisation du dispositif de nébulisation 101.

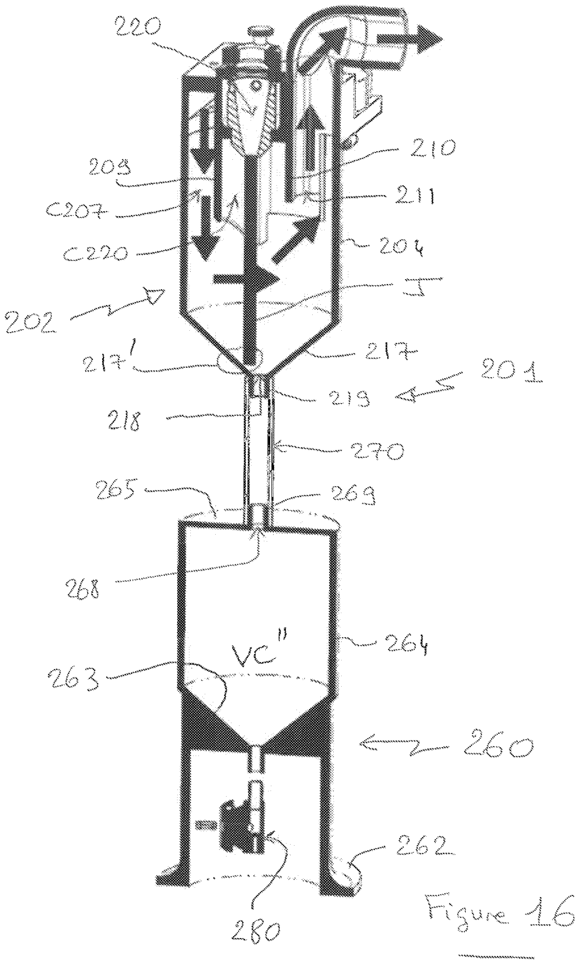

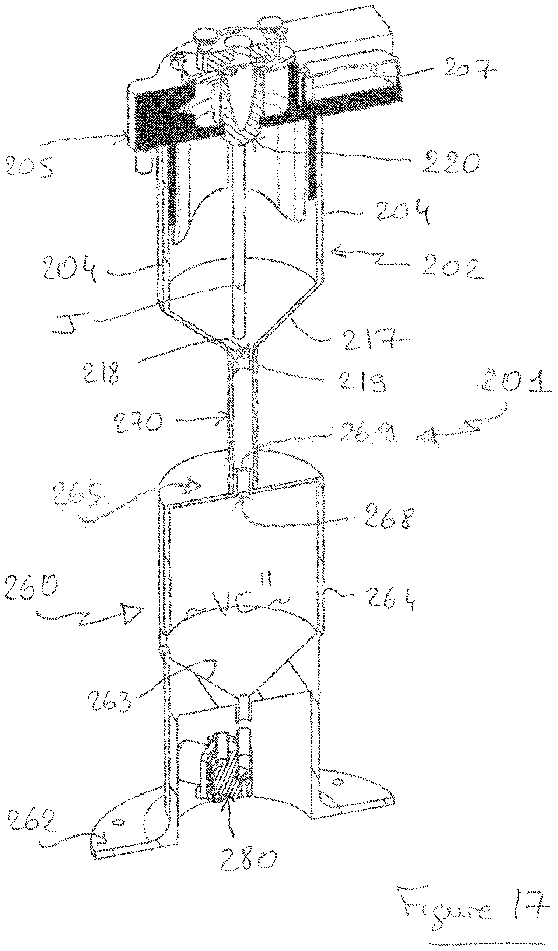

Les figures 16 et 17 illustrent encore un autre dispositif de nébulisation 201, conforme à un troisième mode de réalisation de l'invention. Sur ces figures, les éléments mécaniques analogues à ceux des figures 1 à 13 y sont affectés des mêmes numéros de référence, augmentés de 200.

Le dispositif de nébulisation 201 diffère de celui 1 des figures précédentes, essentiellement en ce qu'il comprend une enceinte annexe 260, séparée de l'enceinte de nébulisation 202. Cette dernière ne possède donc pas un fond fermé et ne délimite pas le volume de collecte, puisque ce dernier est intégré à l'enceinte annexe 260.

Les parois 204 de l'enceinte de nébulisation 202 sont prolongées vers le bas par un fond ouvert 217, formant déflecteur comme on le verra ci-après. Ce fond 217, qui présente une forme d'entonnoir, est creusé d'une ouverture 218 de sortie du liquide, prolongée vers le bas par un col 219. Au sens de l'invention, une telle forme signifie que la section de passage du fond 217 diminue, en particulier de manière continue, depuis son raccordement aux parois 204 en direction de l'ouverture de sortie 218. Dans l'exemple illustré, ce fond est tronconique, c'est-à-dire à symétrie de révolution, l'ouverture 218 étant située au centre du tronc de cône, en vue de dessus. A titre de variantes non représentées, la section transversale du fond peut ne pas être circulaire, mais par exemple polygonale, ovale, ou encore de forme plus complexe. De plus, l'ouverture de sortie peut être déportée par rapport au centre du fond. Cette ouverture de sortie peut être de toute forme appropriée, notamment non cylindrique ; elle peut notamment être réalisée sous forme d'une fente ou autre.

L'enceinte de nébulisation 202 est par ailleurs équipée, dans sa partie supérieure, des mêmes éléments structurels que ceux, prévus en partie supérieure de l'enceinte 2 du premier mode de réalisation. On retrouve notamment le couvercle 205, le ventilateur 207, les jupes 209 et 210 délimitant les trois canaux C207, 211 et C220, la buse 220 et l'embout de diffusion 213.

L'enceinte annexe 260, de forme cylindrique, comprend un corps 263, 264 et un couvercle 265 rapporté sur le corps, avantageusement de manière amovible. Le corps comporte un fond fermé 263, dont la section se rétrécit vers le bas, ainsi que des parois latérales 264 s'étendant à partir de ce fond 263. Ces parois 264 définissent une ouverture principale de l'enceinte annexe 260, qui est obturée au moyen du couvercle précité 265. Ce dernier est rapporté sur l'extrémité supérieure des parois latérales par tout moyen approprié, notamment par encliquetage élastique. A son extrémité inférieure, l'enceinte 260 est équipée d'une embase 262, faisant saillie vers le bas à partir du fond 263. Cette embase est équipée de moyens de fixation, avantageusement amovibles, notamment par vissage, sur un support.

Le couvercle 265 est creusé d'une ouverture 268 d'entrée du liquide, prolongée vers le haut par un col 269. Les ouvertures 218 et 268 sont mises en communication par le liquide, au moyen d'un conduit de liaison 270. Ce dernier, qui est de forme tubulaire, est fixé à la fois sur le col 219 et le col 269. De manière préférée, cette fixation est amovible, notamment par coopération de formes. On notera que l'ouverture de sortie 218, appartenant à l'enceinte 202, est située à une altitude supérieure à celle de l'ouverture d'entrée 268, appartenant à l'enceinte 260. Par conséquent, le liquide est apte à circuler par gravité depuis l'enceinte 202 vers l'enceinte 260.

L'embase 262 de l'enceinte annexe 260 est équipée d'une pompe 280, analogue à celle 30 du premier mode de réalisation. Cette pompe alimente en liquide une conduite non représentée, analogue à celle 31 du premier mode de réalisation. Cette conduite relie les orifices d'admission de la buse 220 et un volume VC", dit de collecte de liquide, délimité par le fond 263 et la partie basse des parois latérales 264 de l'enceinte annexe 260. La pompe 280 et la conduite peuvent être placées à l'extérieur à la fois de l'enceinte 202 et de l'enceinte 260. Cependant, on peut aussi prévoir que la pompe est disposée à l'intérieur de cette enceinte 260 et communique avec la conduite par tout moyen approprié. On peut aussi prévoir que la conduite s'étend, au moins en partie, à l'intérieur d'au moins l'une de ces deux enceintes.

Lorsque du liquide est généré par la buse dans l'enceinte 202, le fond 217 de cette dernière joue avantageusement un rôle de déflecteur. A cet effet, on prévoit de positionner mutuellement l'orifice de sortie 221 de la buse et l'ouverture de sortie 218 du fond, de sorte que le jet de liquide ne s'écoule pas directement au travers de l'ouverture 218. Au contraire, ce positionnement permet au jet de frapper une zone 217' du fond 217 qui est située au voisinage de l'ouverture 218, mais à distance de cette dernière. Cette configuration est avantageuse car elle permet de limiter les bulles d'air dans le réservoir d'eau, provoquées au moment où le jet percute la surface de cette eau. De plus, elle permet de diminuer le bruit lié à l'écoulement hydraulique, tout en canalisant le flux d'air autour du jet.

On peut prévoir de constituer, conformément à l'invention, un kit de nébulisation comprenant tout d'abord les deux enceintes 202 et 260 ci-dessus. Ce kit comporte en outre plusieurs conduits de liaison, analogues à celui 270. La fixation amovible de chaque conduit sur les enceintes permet de changer ces conduits, en fonction notamment de la position relative que doivent adopter les enceintes. Ainsi, dans l'exemple illustré, l'enceinte annexe 260 est située au droit de celle 202. On peut cependant prévoir que ces deux enceintes soient décalées latéralement, ce qui modifie le positionnement mutuel des ouvertures 218 et 268. Par ailleurs, ce décalage latéral tend à modifier les conditions hydrauliques de l'ensemble du dispositif. On conçoit que, dans ces conditions, il est avantageux de prévoir un conduit différent de celui 270, qui peut présenter une dimension plus grande, une forme non rectiligne, voire une section de passage différente.

Conformément à l'invention on peut donc disposer d'un jeu de conduits, susceptibles de relier sélectivement ces deux enceintes. De façon avantageuse, au moins un paramètre varie entre au moins deux de ces conduits. Un tel paramètre peut être entre autres la longueur, la nature du matériau, la section, le profil général (rectiligne, en L, en S, en Z, ...). De manière générale on choisit des conduits de liaison dont la section de passage évite tout goulet d'étranglement, de manière à assurer un passage en continu de l'ensemble du liquide s'écoulant de l'enceinte supérieure 202 vers celle 260 formant le volume de collecte.

Le mode de réalisation des figures 16 et 17 présente des avantages spécifiques. En particulier, la présence du conduit de liaison 270, de préférence amovible et interchangeable, confère un nouvel emplacement pour un système de filtration et/ou purification de l'eau. En particulier, on peut prévoir de munir ce conduit d'un dispositif de purification par ultra-violets, de type connu en soi. La pompe permet d'accélérer le passage du liquide, dans sa configuration d'aspiration, sans injecter de bulles dans le circuit. Cela permet aussi de filtrer automatiquement les poussières qu'aurait collectées le brouillard non extrait, ces poussières étant une source significative de pollution de l'eau dans l'enceinte de nébulisation.

A titre de variante supplémentaire, non représentée, le système de filtration et/ou purification de l'eau décrit au paragraphe précédent peut être placé dans les moyens de circulation, reliant le volume de collecte et la buse. Cette variante peut être mise en oeuvre dans l'un ou l'autre des différents modes de réalisation, décrits dans la présente demande de brevet.

L'invention n'est pas limitée aux exemples décrits ci-dessus.

En effet, on peut prévoir que le ventilateur 7 n'est pas monté sur le couvercle. Dans ce cas, ce dernier est fixé sur la paroi latérale de l'enceinte, notamment en partie supérieure de celle-ci.

On peut également prévoir que le déflecteur 17 n'est pas venu de matière avec le couvercle. Dans ce cas, il peut être venu de matière avec les parois de l'enceinte, ou encore être rapporté sur ces parois ou sur ce couvercle, par tout moyen approprié.

On peut également prévoir que l'orifice principal de diffusion 14 n'est pas ménagé dans le couvercle. Dans ce cas, il peut par exemple être réalisé dans les parois de l'enceinte.

On peut en outre prévoir que le liquide diffusé par l'orifice 14 contient un additif de tout type souhaité, à des fins de désinfection, de désodorisation ou analogues. Dans cet esprit, prévoir un additif à base d'huile essentielle est avantageux.

On peut également prévoir d'équiper le dispositif conforme à l'invention avec un moyen assurant la désinfection du liquide, contenu dans l'enceinte. Un tel moyen de désinfection peut être de tout type approprié, notamment par choc thermique (résistance chauffante) ou encore à base de LED UV (Light Emitting Diodes Ultraviolet).

On peut en outre prévoir que le dispositif de nébulisation, conforme à l'invention, possède au moins deux orifices de diffusion. Par exemple, en référence à l'exemple illustré, on peut prévoir trois orifices analogues à celui 14, régulièrement répartis de façon angulaire, afin de pouvoir diffuser du liquide dans plusieurs directions de l'espace. On peut également prévoir au moins un autre orifice supplémentaire, susceptible d'assurer une diffusion de liquide vers le haut.

## Revendications

1. Dispositif de nébulisation (1 ; 101 ; 201) comportant :
- une buse (20 ; 120 ; 220) de nébulisation pourvue d'au moins un orifice d'admission (23) de liquide et d'au moins un orifice de sortie (21) de liquide, prévu en partie inférieure de ladite buse, ainsi que d'un élément piézo-électrique (22), prévu en partie supérieure de ladite buse, apte à émettre des ondes acoustiques dans ledit liquide,
- une enceinte de nébulisation (2 ; 102 ; 202) comprenant au moins un orifice de diffusion (14), ladite buse étant apte à générer un jet de liquide à l'intérieur de ladite enceinte de nébulisation,
- un volume (VC ; VC") de liquide, dit de collecte, propre à collecter une fraction du jet de liquide généré par la buse et également propre à alimenter le au moins un orifice d'admission (23) de la buse,
- des moyens (31) de circulation s'étendant entre le volume de collecte (VC ; VC") et le au moins un orifice d'admission,
- des moyens de ventilation (7 ; 107 ; 207), propres à générer un flux gazeux destiné à entraîner une partie du liquide, sortant de la buse, en direction du au moins un orifice de diffusion (14)
le volume de collecte (VC ; VC") de liquide étant apte à collecter par gravité ladite fraction du jet de liquide généré par la buse,
**caractérisé en ce que** l'enceinte de nébulisation comprend un fond fermé (3), une paroi supérieure (5) et des parois latérales (4) reliant ce fond et cette paroi supérieure, le volume de collecte (VC) étant délimité par le fond et une partie des parois latérales, et **en ce que** la paroi supérieure est formée par un couvercle (5) rapporté de façon amovible sur les parois latérales (4) de l'enceinte, la buse de nébulisation (20) étant fixée sur ce couvercle.

2. Dispositif de nébulisation (1) selon la revendication 1, **caractérisé en ce que** le volume de collecte (VC) de liquide est intégré à l'enceinte de nébulisation (2 ; 102).

3. Dispositif de nébulisation (1) selon la revendication 1, **caractérisé en ce que** le volume de collecte (VC") de liquide est intégré à une enceinte annexe (260) séparée de l'enceinte de nébulisation (2) par un conduit de liaison (270).

4. Dispositif de nébulisation selon l'une quelconque des revendications précédentes, **caractérisé en ce qu'**un déflecteur (17) est prévu au-dessous de l'orifice de sortie (21) de la buse, de manière à recevoir le jet de liquide et à éviter l'écoulement direct de ce dernier vers le fond de l'enceinte.

5. Dispositif de nébulisation selon l'une quelconque des revendications précédentes, **caractérisé en ce que** les moyens de ventilation et la buse de nébulisation sont placés au-dessus de canaux respectifs de ventilation (C7) et de nébulisation (C20), s'étendant dans le volume intérieur de l'enceinte, ces canaux étant séparés par une première jupe de séparation (9).

6. Dispositif de nébulisation selon la revendication 5, **caractérisé en ce qu'**il comprend un canal intermédiaire de diffusion (11), débouchant dans l'orifice principal de diffusion (14), ce canal intermédiaire et le canal de nébulisation (C20) étant séparés par une deuxième jupe de séparation (10).

7. Dispositif de nébulisation selon l'une quelconque des revendications précédentes, **caractérisé en ce qu'**il comprend un réservoir secondaire (40), déporté par rapport à l'enceinte, ce réservoir et l'enceinte étant reliés selon le principe des vases communicants, ce réservoir étant équipé d'un capteur de présence de liquide (43) et/ou d'un organe flotteur (44).

8. Dispositif de nébulisation (1) selon l'une quelconque des revendications précédentes, **caractérisé en ce que** l'axe principal de la buse est incliné par rapport à la verticale selon un angle compris entre -45° et +45°, en particulier entre -20° et +20°, en particulier entre - 10° et +10°, notamment selon un angle de 0°.

9. Dispositif de nébulisation (1) selon l'une quelconque des revendications précédentes, **caractérisé en ce que** les moyens de circulation (31) et/ou le ou chaque conduit de liaison (270) est (sont) pourvu(s) d'un système de purification et/ou filtration de liquide.

10. Procédé de mise en oeuvre d'un dispositif (1) de nébulisation selon l'une quelconque des revendications précédentes, ce procédé comprenant les étapes suivantes :
- on remplit au moins partiellement le volume intérieur de liquide,
- on active une pompe de circulation appartenant aux moyens de circulation,
- on active l'élément piézoélectrique, de manière à former un jet de liquide,
- on active les moyens de ventilation, de manière à générer un flux d'air,
- on emporte des micro gouttelettes présentes dans ce jet de liquide, de manière à former un micro brouillard,
- on évacue ce micro brouillard par l'orifice de diffusion.

11. Procédé selon la revendication 10, **caractérisé en ce qu'**on mesure la vitesse de rotation de la pompe de circulation et on arrête ou on réduit le fonctionnement de l'élément piézoélectique, si la vitesse mesurée devient supérieure à une valeur prédéterminée.

12. Procédé selon la revendication 10 ou 11, **caractérisé en ce qu'**on mesure la puissance consommée par l'élément piézoélectique, et on asservit la pompe en fonction de la valeur de cette puissance mesurée.

13. Kit de nébulisation comportant :
- une buse de nébulisation (220) pourvue d'au moins un orifice d'admission de liquide et d'au moins un orifice de sortie de liquide, prévu en partie inférieure de ladite buse, ainsi que d'un élément piézo-électrique, prévu en partie supérieure de ladite buse, apte à émettre des ondes acoustiques dans ledit liquide,
- une enceinte de nébulisation (202) comprenant au moins un orifice de diffusion, ladite buse étant apte à générer un jet de liquide à l'intérieur de ladite enceinte de nébulisation,
- des moyens de ventilation (207), propres à générer un flux gazeux destiné à entraîner une partie du liquide, sortant de la buse, en direction du au moins un orifice de diffusion,
- une enceinte annexe (260) définissant un volume (VC") de liquide, dit de collecte, propre à collecter par gravité une fraction du jet de liquide généré par la buse et également propre à alimenter le au moins un orifice d'admission de la buse,
- des moyens de circulation s'étendant entre le volume de collecte (VC") et le au moins un orifice d'admission de la buse (220),
- au moins deux conduits de liaison (270), propres à être fixés de manière amovible à la fois à l'enceinte de nébulisation (202) et à l'enceinte annexe (260), de manière à relier par le liquide cette enceinte de nébulisation et cette enceinte annexe,
**caractérisé en ce que** l'enceinte de nébulisation (202) comprend un fond ouvert (217), une paroi supérieure et des parois latérales (204) reliant ce fond et cette paroi supérieure, la paroi supérieure étant formée par un couvercle (205) rapporté de façon amovible sur les parois latérales (204) de l'enceinte, la buse de nébulisation (220) étant fixée sur ce couvercle.

## Patentansprüche

1. Vernebelungsvorrichtung (1; 101; 201), umfassend:
- eine Vernebelungsdüse (20; 120; 220), die ausgestattet ist mit mindestens einer Flüssigkeitseinlassöffnung (23) und mit mindestens einer Flüssigkeitsauslassöffnung (21), die im unteren Teil der Düse vorgesehen ist, sowie mit einem piezoelektrischen Element (22), das im oberen Teil der Düse vorgesehen und in der Lage ist, akustische Wellen in der Flüssigkeit auszusenden,
- ein Vernebelungsgehäuse (2; 102; 202), das mindestens eine Diffusionsöffnung (14) umfasst, wobei die Düse in der Lage ist, einen Flüssigkeitsstrahl innerhalb des Vernebelungsgehäuses zu erzeugen,
- ein Flüssigkeitsvolumen (VC; VC"), genannt Sammelvolumen, geeignet zum Sammeln eines Teils des von der Düse erzeugten Flüssigkeitsstrahls und auch geeignet zur Versorgung der mindestens einen Einlassöffnung (23) der Düse,
- Zirkulationsmittel (31), die sich zwischen dem Sammelvolumen (VC; VC") und der mindestens einen Einlassöffnung erstrecken,
- Belüftungsmittel (7; 107; 207), die in der Lage sind, einen Gasstrom zu erzeugen, der dazu bestimmt ist, einen Teil der die Düse verlassenden Flüssigkeit in Richtung mindestens einer Diffusionsöffnung (14) zu treiben,
wobei das Sammelvolumen (VC; VC") der Flüssigkeit in der Lage ist, durch Schwerkraft diesen Teil des von der Düse erzeugten Flüssigkeitsstrahls zu sammeln,
**dadurch gekennzeichnet, dass** die Vernebelungskammer einen geschlossenen Boden (3), eine obere Wand (5) und Seitenwände (4) umfasst, die diesen Boden und diese obere Wand verbinden, wobei das Sammelvolumen (VC) durch den Boden und einen Teil der Seitenwände begrenzt wird, und dass die obere Wand durch einen an den Seitenwänden (4) des Gehäuses, insbesondere abnehmbar, befestigten Deckel (5) gebildet ist, an dem die Vernebelungsdüse (20) befestigt ist.

2. Vernebelungsgerät nach Anspruch 1, **dadurch gekennzeichnet, dass** das Sammelvolumen (VC) der Flüssigkeit in das Vernebelungsgehäuse (2; 102) integriert ist.

3. Vernebelungsvorrichtung (1) nach Anspruch 1, **dadurch gekennzeichnet, dass** das Sammelvolumen (VC") der Flüssigkeit in einem Anbaugehäuse (260) integriert ist, das vom Vernebelungsgehäuse (2) durch eine Verbindungsleitung (270) getrennt ist.

4. Vernebelungsvorrichtung nach einem der vorhergehenden Ansprüche, **dadurch gekennzeichnet, dass** unterhalb der Austrittsöffnung (21) der Düse ein Deflektor (17) vorgesehen ist, um den Flüssigkeitsstrahl zu empfangen und eine direkte Strömung des letzteren in Richtung der Unterseite des Gehäuses zu verhindern

5. Vernebelungsvorrichtung nach einem der vorhergehenden Ansprüche, **dadurch gekennzeichnet, dass** die Belüftungsmittel und die Vernebelungsdüse über den jeweiligen Belüftungskanälen (C7) und Vernebelungskanälen (C20) angeordnet sind, die sich in das Innenvolumen des Gehäuses erstrecken, wobei diese Kanäle durch getrennt sind eine erste Trennschürze (9).

6. Vernebelungsvorrichtung nach Anspruch 5, **dadurch gekennzeichnet, dass** sie einen Zwischendiffusionskanal (11) umfasst, der in die Hauptdiffusionsöffnung (14) mündet, wobei dieser Zwischenkanal und der Vernebelungskanal (C20) durch eine zweite Trennschürze (10) getrennt sind.

7. Vernebelungsvorrichtung nach einem der vorhergehenden Ansprüche, **dadurch gekennzeichnet, dass** sie einen sekundären Behälter (40) umfasst, der relativ zum Gehäuse versetzt ist, wobei dieser Behälter und das Gehäuse nach dem Prinzip kommunizierender Gefäße verbunden sind und dieser Behälter mit einem Flüssigkeitsanwesenheitssensor (43) und/oder ein Schwimmerelement (44) ausgestattet ist.

8. Vernebelungsvorrichtung (1) nach einem der vorhergehenden Ansprüche, **dadurch gekennzeichnet, dass** die Hauptachse der Düse gegenüber der Vertikalen in einem Winkel zwischen -45° und +45° geneigt ist, insbesondere zwischen -20° und +20°, insbesondere zwischen -10° und + 10°, insbesondere um 0°.

9. Vernebelungsvorrichtung (1) nach einem der vorhergehenden Ansprüche, wobei die Zirkulationseinrichtung (31) und/oder die oder jede Verbindungsleitung (270) mit einem Reinigungssystem und/oder einer Flüssigkeitsfiltration ausgestattet ist/sind.

10. Verfahren zur Implementierung einer Vernebelungsvorrichtung (1) nach einem der vorhergehenden Ansprüche, wobei dieses Verfahren die folgenden Schritte umfasst:
- das Innenvolumen wird zumindest teilweise mit Flüssigkeit gefüllt,
- die Umwälzpumpe der Zirkulationsmittel wird aktiviert,
- das piezoelektrische Element wird aktiviert, so dass ein Flüssigkeitsstrahl entsteht,
- die Belüftungsmittel werden aktiviert, um einen Luftstrom zu erzeugen,
- die diesem Flüssigkeitsstrahl vorhandenen Mikrotröpfchen werden mitgetrieben, so dass ein Mikronebel entsteht,
- dieser Mikronebel wird durch die Diffusionsöffnung evakuiert.

11. Verfahren nach Anspruch 10, **dadurch gekennzeichnet, dass** die Drehzahl der Umwälzpumpe gemessen wird und der Betrieb des Piezoelements gestoppt oder reduziert wird, wenn die gemessene Drehzahl größer als ein vorgegebener Wert wird.

12. Verfahren nach Anspruch 10 oder 11, **dadurch gekennzeichnet, dass** die vom piezoelektrischen Element aufgenommene Leistung gemessen wird und die Pumpe entsprechend dem Wert dieser gemessenen Leistung gesteuert wird.

13. Vernebelungsset umfassend:
- eine Vernebelungsdüse (220), die mit mindestens einer Flüssigkeitseinlassöffnung und mindestens einer im unteren Teil der Düse vorgesehenen Flüssigkeitsauslassöffnung ausgestattet ist, sowie einem im oberen Teil der Düse vorgesehenen piezoelektrischen Element, das akustische Wellen in die Flüssigkeit emittieren kann,
- ein Vernebelungsgehäuse (202), das mindestens eine Diffusionsöffnung umfasst, wobei die Düse in der Lage ist, einen Flüssigkeitsstrahl innerhalb des Vernebelungsgehäuses zu erzeugen,
- Belüftungsmittel (207), die in der Lage sind, einen Gasstrom zu erzeugen, der dazu bestimmt ist, einen Teil der die Düse verlassenden Flüssigkeit in Richtung mindestens einer Diffusionsöffnung zu treiben,
- ein zusätzliches Gehäuse (260), das ein als Sammlungsvolumen bezeichnetes Flüssigkeitsvolumen (VC") definiert, das in der Lage ist, durch Schwerkraft einen Teil des von der Düse erzeugten Flüssigkeitsstrahls zu sammeln und auch in der Lage ist, die mindestens eine Einlassöffnung der Düse zu versorgen,
- Zirkulationsmittel, die sich zwischen dem Sammelvolumen (VC") und der mindestens einen Einlassöffnung der Düse (220) erstrecken,
- mindestens zwei Verbindungsleitungen (270), die abnehmbar sowohl am Vernebelungsgehäuse (202) als auch am Zusatzgehäuse (260) befestigt werden können, um dieses Vernebelungsgehäuse und dieses Zusatzgehäuse durch die Flüssigkeit zu verbinden,
**dadurch gekennzeichnet, dass** die Vernebelungskammer (202) einen geschlossenen Boden (217), eine obere Wand und Seitenwände (204) umfasst, die diesen Boden und diese obere Wand verbinden, wobei die obere Wand durch einen an den Seitenwänden (204) des Gehäuses abnehmbar befestigten Deckel (205) gebildet ist, an dem die Vernebelungsdüse (220) befestigt ist.

## Claims

1. Nebulization device (1; 101; 201) comprising:
- a nebulizing nozzle (20; 120; 220) provided with at least one liquid inlet orifice (23) and at least one liquid outlet orifice (21), provided in the lower part of said nozzle, as well as a piezoelectric element (22), provided in the upper part of said nozzle, capable of emitting acoustic waves into said liquid,
- a nebulization enclosure (2; 102; 202) comprising at least one diffusion orifice (14), said nozzle being capable of generating a jet of liquid inside said nebulization enclosure,
- a volume (VC; VC") of liquid, called collection volume, suitable for collecting a fraction of the jet of liquid generated by the nozzle and also suitable for supplying the at least one inlet orifice (23) of the nozzle,
- circulation means (31) extending between the collection volume (VC; VC") and the at least one inlet orifice,
- ventilation means (7; 107; 207), capable of generating a gas flow intended to entrain a portion of the liquid, exiting the nozzle, towards the at least one diffusion orifice (14),
said collection volume (VC; VC") being capable of collecting by gravity said fration of the jet liquid generated by the nozzle,
**characterized in that** the nebulization enclosure comprises a closed bottom (3), an upper wall (5) and side walls (4) connecting this bottom and this upper wall, the collection volume (VC) being delimited by the bottom and a part of the side walls, and **in that** the upper wall is formed by a cover (5) attached removably to the side walls (4) of the enclosure, the nebulization nozzle (20) being fixed to this cover.

2. Nebulization device (1) according to claim 1, **characterized in that** the liquid collection volume (VC) is integrated into the nebulization enclosure (2; 102).

3. Nebulization device (1) according to claim 1, **characterized in that** the liquid collection volume (VC") is integrated into an annex enclosure (260) separated from the nebulization enclosure (2) by a connecting conduit (270).

4. Nebulizing device according to any one of the preceding claims, **characterized in that** a deflector (17) is provided below the outlet orifice (21) of the nozzle, so as to receive the jet of liquid and to prevent the direct flow of the latter towards the bottom of the enclosure.

5. Nebulizing device according to any one of the preceding claims, **characterized in that** the ventilation means and the nebulizing nozzle are placed above respective ventilation (C7) and nebulizing (C20) channels, extending in the interior volume of the enclosure, these channels being separated by a first separation skirt (9).

6. Nebulization device according to claim 5, **characterized in that** it comprises an intermediate diffusion channel (11), opening into the main diffusion orifice (14), this intermediate channel and the nebulization channel (C20) being separated by a second separation skirt (10).

7. Nebulization device according to any one of the preceding claims, **characterized in that** it comprises a secondary reservoir (40), offset relative to the enclosure, this reservoir and the enclosure being connected according to the principle of communicating vessels, this reservoir being equipped with a liquid presence sensor (43) and/or a float member (44).

8. Nebulizing device (1) according to any one of the preceding claims, **characterized in that** the main axis of the nozzle is inclined relative to the vertical at an angle between -45° and +45°, in particular between -20° and +20°, in particular between -10° and +10°, and in particular at an angle of 0°.

9. Nebulization device (1) according to any one of the preceding claims, **characterized in that** the circulation means (31) and/or the or each connecting conduit (270) is (are) provided with a liquid purification and/or filtration system.

10. Method for implementing a nebulization device (1) according to any one of the preceding claims, this method comprising the following steps:
- the interior volume is at least partially filled with liquid,
- the circulation pump belonging to the circulation means is activated,
- the piezoelectric element is activated, so as to form a jet of liquid,
- the ventilation means are activated, so as to generate an air flow,
- micro droplets present in this jet of liquid are carried away, so as to form a micro fog,
- this micro fog is evacuated through the diffusion orifice.

11. Method according to claim 10, **characterized in that** the rotation speed of the circulation pump is measured and the operation of the piezoelectric element is stopped or reduced if the measured speed becomes greater than a predetermined value.

12. Method according to claim 10 or 11, **characterized in that** the power consumed by the piezoelectric element is measured, and the pump is controlled according to the value of this measured power.

13. Nebulization kit including:
- a nebulizing nozzle (220) provided with at least one liquid inlet and at least one liquid outlet, provided in the lower part of said nozzle, as well as a piezoelectric element, provided in the upper part of said nozzle, capable of emitting acoustic waves into said liquid,
- a nebulization enclosure (202) comprising at least one diffusion orifice, said nozzle being capable of generating a jet of liquid inside said nebulization enclosure,
- ventilation means (207), capable of generating a gas flow intended to entrain part of the liquid, leaving the nozzle, towards the at least one diffusion orifice,
- an annex enclosure (260) defining a volume (VC") of liquid, called a collection volume, capable of collecting by gravity a fraction of the jet of liquid generated by the nozzle and also capable of supplying the at least one inlet orifice of the nozzle,
- circulation means extending between the collection volume (VC") and the at least one inlet orifice of the nozzle (220),
- at least two connecting conduits (270), suitable for being removably fixed both to the nebulization enclosure (202) and to the annex enclosure (260), so as to connect this nebulization enclosure and this annex enclosure by the liquid,
**characterized in that** the nebulization enclosure (202) comprises a closed bottom (217), an upper wall and side walls (204) connecting this bottom and this upper wall, the upper wall being formed by a cover (205) attached removably to the side walls (204) of the enclosure, the nebulization nozzle (220) being fixed to this cover.
